# FASCICULE DE BREVET EUROPEEN

(11) **EP 1 215 425 B1**
(45) Date de publication et mention de la délivrance du brevet: **17.05.2006**
(21) Numéro de dépôt: 00870297.9
(22) Date de dépôt: 13.12.2000
(51) Int. Cl.: F16K 1/46

(54) **Dispositif d'etancheite pour soupape ou vanne a clapet**
Dichtungsanordnung eines Ventils
Sealing system for a valve

(43) Date de publication de la demande: 19.06.2002
(73) Titulaire: Techspace Aero S.A., 4041 Herstal (BE)
(72) Inventeur: Meurant, Karin, 4250 Geer (BE); Monfort, Marc, 4845 Jalhay (BE); Dubuisson, Raymond, 4801 Stembert (BE)
(74) Mandataire: Van Malderen, Joelle

(56) Documents cités:
- DE-A- 2 141 051
- DE-A- 2 319 660
- US-A- 3 086 550
- US-A- 3 301 524

## Description

### Objet de l'invention

La présente invention se rapporte à un dispositif d'étanchéité pour vanne ou soupape à clapet sur siège plan.

La présente invention se rapporte également à ladite vanne ou soupape à clapet sur siège plan muni dudit dispositif d'étanchéité.

Le domaine d'application de l'invention est celui des températures cryogéniques et/ou des très hautes pressions.

### Etat de la technique

Dans le domaine des vannes ou soupapes à clapet, il est connu que lorsqu'on réalise une étanchéité par contact plan, le lieu des points de portance ou section hydraulique sur laquelle se fait la séparation entre l'amont et l'aval du joint peut se situer à n'importe quelle valeur du diamètre de la section de contact.

Dans les applications aux températures cryogéniques et aux très hautes pressions (par exemple 200 bars), qui doivent présenter un niveau de fuite calibré et déterminé, la section de contact doit être connue avec précision car elle intervient dans l'équilibre des forces actionnant la vanne.

Un type de joint d'étanchéité généralement utilisé est le joint dit "en lame". Il s'agit d'un joint présentant une zone de contact fort réduite et dégagée. Cependant, le joint en lame n'est pas compatible avec les applications susmentionnées car il peut se révéler friable et cassant dans ces conditions extrêmes.

Un autre type de joint développé est un joint constitué d'une pièce massive en polymère, PCTFE ou analogue, avec une face d'étanchéité conique visant à créer une couronne de faible largeur. Toutefois, lors du serrage de ce joint, il se produit une déformation, voire un relèvement du joint, déplaçant la zone d'étanchéité.

Le brevet américain US-A-3,086,550 décrit une vanne à clapet pour pompe de forage pétrolier spécialement adaptée pour travailler à haute pression (jusqu'à 3000 psi ou 200 bars) et dans des conditions sévères (fluide contenant de la boue, des cailloux, etc.). La tête de clapet est terminée par un coussinet de même forme que le siège de la vanne, fixé uniquement sur sa circonférence et qui peut être mis sous pression grâce à la communication avec une chambre pressurisée aménagée dans le clapet. Ce coussinet comprend une partie élastique constituée d'un matériau tel que le caoutchouc ou le plastique et est renforcé par un réseau de fils d'acier entrecroisés, éventuellement recouverts de nylon.

### Buts de l'invention

La présente invention vise à fournir un nouveau type de dispositif d'étanchéité, pour une configuration de clapet de vanne ou de soupape sur siège plan, permettant de garantir un positionnement très précis du diamètre d'étanchéité.

La présente invention vise également à fournir un dispositif qui permet, en garantissant un positionnement précis du diamètre d'étanchéité, d'obtenir un niveau de fuite calibré et déterminé.

Un but complémentaire de l'invention est de fournir un joint d'étanchéité, pour une configuration de clapet de vanne ou de soupape sur siège plan, pouvant être utilisé aux très hautes pressions et/ou aux températures cryogéniques.

### Résumé de l'invention

La présente invention se rapporte à un dispositif d'étanchéité pour soupape à clapet sur siège plan, comprenant un support arrière de joint à dégagement conique et un joint d'étanchéité, ledit joint présentant une surface arrière plane avec un dégagement conique et correspondant à la surface du support arrière, caractérisé en ce que l'angle formé par le cône de dégagement avec la partie plane dudit joint est plus petit que l'angle formé par le cône de dégagement dudit support arrière avec la surface plane dudit support arrière.

De préférence, l'angle du cône dudit joint est plus petit d'au moins trois degrés que l'angle du cône dudit support arrière, et de manière avantageuse, l'angle du cône dudit joint est d'environ 20 degrés pour un angle de cône dudit support arrière d'environ 25 degrés.

Avantageusement, ledit joint est une pièce massive en polymère, de préférence en PCTFE.

Selon une forme d'exécution préférée de la présente invention, le joint présente une surface d'étanchéité présentant un angle de quelques degrés et de préférence inférieur à 5 degrés par rapport à la surface du siège plan.

De préférence, en position de serrage du clapet, la zone d'étanchéité périphérique entre le joint et le siège présente une largeur de quelques millimètres, et de préférence inférieure à 1 mm.

La présente invention se rapporte également à une vanne ou soupape à clapet sur siège plan comprenant le dispositif d'étanchéité selon l'invention.

Un dernier objet de la présente invention est l'utilisation du dispositif d'étanchéité de l'invention pour une vanne ou soupape à clapet sur siège plan fonctionnant aux températures cryogéniques et/ou aux très hautes pressions.

### Brève description des figures

La figure 1 représente une vue en coupe d'un joint de clapet de vanne ou soupape, selon l'état de la technique, dit "en lame".

La figure 2 représente une vue en coupe d'un joint de clapet conique dégagé pour vanne ou soupape, selon l'état de la technique.

La figure 3 représente une vue en coupe d'un détail du dispositif d'étanchéité pour vanne ou soupape selon la présente invention.

La figure 4 représente la vue en coupe du joint présent dans le dispositif d'étanchéité décrit à la figure 3, qui subit un mouvement d'écrasement lors de la fermeture du clapet.

### Description de plusieurs formes d'exécution de l'état de la technique

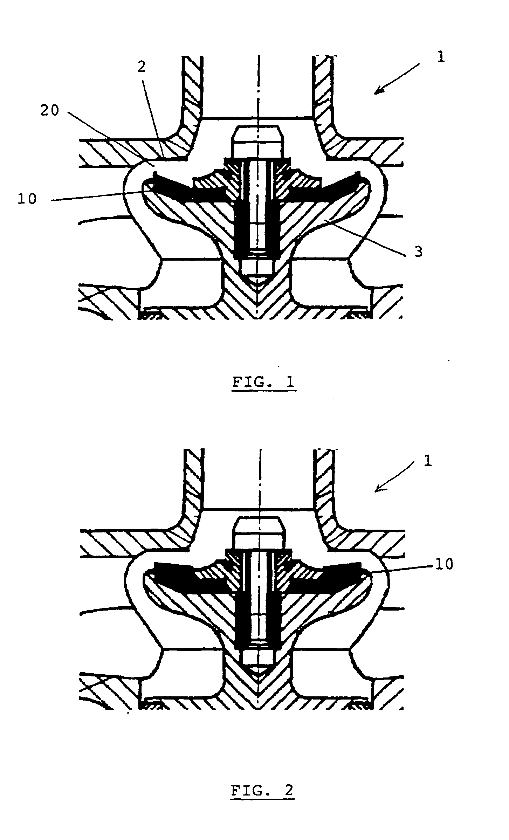

La figure 1 décrit, selon l'état de la technique, une vanne 1 ou soupape à clapet à siège plan 2 en position ouverte. Le dispositif d'étanchéité est constitué par le clapet 3 et comprend un joint 10 dit en "joint de lame", qui va, lors de la fermeture de ladite vanne, se positionner sur une zone de contact 20 sur le siège plan 2 relativement réduite.

Néanmoins, l'utilisation d'un tel type de joint ne convient pas pour les applications considérées dans la présente demande de brevet, c'est-à-dire l'utilisation à des hautes pressions ou à des températures cryogéniques.

La figure 2 décrit une vanne ou soupape à clapet 1 munie d'un dispositif d'étanchéité, également en position ouverte. Le dispositif d'étanchéité possède un joint 10 conique, qui présente l'inconvénient majeur, lors de la fermeture dudit clapet, d'avoir tendance à se déformer et même à se relever, ce qui nuit à la précision de la zone d'étanchéité.

### Description d'une forme d'exécution détaillée de la présente invention

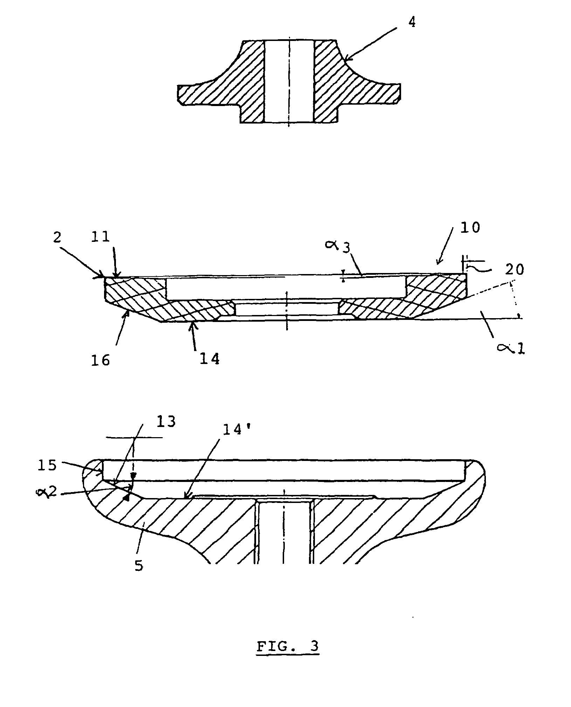

Un dispositif d'étanchéité selon la forme d'exécution préférée de la présente invention est représenté à la figure 3. Ce dispositif d'étanchéité 3 constitue le clapet d'une vanne ou soupape à clapet sur siège plan représenté par la zone 2. Le dispositif d'étanchéité comprend d'une part une pièce de maintien centrale 4, un joint d'étanchéité 10 et un support arrière 5 de joint.

On observe que ledit joint 10 présente une face d'étanchéité 11 qui présente un angle α3 de quelques degrés par rapport à la surface 2 du siège plan sur lequel ledit joint va s'appuyer. Cet angle est de préférence inférieur à 5 degrés, et dans l'exemple repris dans la figure, est proche de 1,5 degré. Le joint présente donc une surface d'étanchéité 11 légèrement conique.

Selon une caractéristique importante de la présente invention, le joint 10 présente une surface arrière 14 plane avec un dégagement conique 16 pour pouvoir s'adapter au support arrière 5 qui présente également une surface de contact plane 14' avec un dégagement conique 13.

Selon la caractéristique de la présente invention, l'angle α1 formé par le cône de dégagement 16 dudit joint 10 avec la partie plane 14 de la surface arrière dudit joint est plus petit que l'angle α2 formé par le cône de dégagement 13 dudit support arrière avec ladite surface plane 14'.

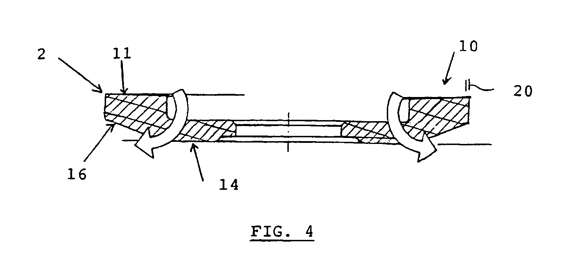

Ceci signifie que lors du serrage, le joint 10 vient remplir le "vide" 13 créé dans le support arrière 5. Ceci provoque un mouvement de l'ensemble du joint 10, qui va avoir tendance à se creuser davantage et à présenter une surface d'étanchéité 11 d'autant plus concave ainsi que représenté à la figure 4.

En pratique, le procédé d'étanchement d'une soupape à clapet sur siège plan s'effectue comme suit :
- lors de la fermeture du clapet, le joint 10 est serré entre une pièce de maintien centrale 4, le siège plan 2 du clapet et le support arrière 5;
- en position finale de serrage, la surface conique 11 du joint 10 s'ajuste, en se déformant de manière convexe, à la surface conique du support arrière ;
- la déformation du joint 10 se répercute au niveau de la surface de contact 11 dudit joint avec le siège, ladite surface 11 prenant la forme d'une couronne périphérique plane de faible largeur et de diamètre moyen connu avec précision et stable en fonction des conditions d'utilisation.

Le design du joint 10 et de son support arrière 5 ne prévoit volontairement aucun contact sur le cône arrière 16 du joint, mais bien un ajustement précis au "diamètre extérieur" 15 de façon à canaliser la déformation du joint. Le joint est dessiné pour se déformer et cette déformation est contrôlée grâce aux ajustements des diamètres respectifs et aux conditions de serrage. Le support arrière 5 maintient ainsi le joint 10 en périphérie.

Le contact joint-support se fait donc grâce à un angle différencié. Le support arrière 5 présente un angle α2 plus ouvert que l'angle de dégagement α1 du joint 10, avec un fond dégagé 14. Lors du serrage, le joint 10 s'ajuste donc parfaitement sur son support 5, en se creusant.

Le concept innovant de l'invention comprend également la définition d'un joint suffisamment massif pour assurer sa résistance mécanique et la facilité d'usinage, tout en réalisant une couronne mince pour localiser avec précision la zone d'étanchéité.

## Revendications

1. Dispositif d'étanchéité (3) pour soupape à clapet (1) sur siège plan (2), comprenant un support arrière (5) de joint à dégagement conique (13) et un joint d'étanchéité (10), ledit joint (10) présentant une surface arrière plane (14) avec un dégagement conique (16) et correspondant à la surface (14') du support arrière (5), **caractérisé en ce que** l'angle (α1) formé par le cône de dégagement (16) avec la partie plane (14) dudit joint (10) est plus petit que l'angle (α2) formé par le cône de dégagement (13) dudit support arrière (5) avec la surface plane (14') dudit support arrière (5).

2. Dispositif selon la revendication 1, **caractérisé en ce que** l'angle du cône (α1) dudit joint (10) est plus petit d'au moins trois degrés que l'angle du cône (α2) dudit support arrière (5).

3. Dispositif selon la revendication 1 ou 2, **caractérisé en ce que** l'angle du cône (α1) dudit joint (10) est d'environ 20 degrés pour un angle de cône (α2) dudit support arrière (5) d'environ 25 degrés.

4. Dispositif selon l'une des revendications précédentes, **caractérisé en ce que** ledit joint (10) est une pièce massive en polymère, de préférence en PCTFE.

5. Dispositif selon l'une quelconque des revendications précédentes, **caractérisé en ce que** le joint (10) présente une surface d'étanchéité (11) présentant un angle (α3) de quelques degrés et de préférence inférieur à 5 degrés par rapport à la surface du siège plan (2).

6. Dispositif selon la revendication 5, **caractérisé en ce que**, en position de serrage du clapet (3), la zone d'étanchéité périphérique (20) entre le joint (10) et le siège (2) présente une largeur de quelques millimètres, et de préférence inférieure à 1 mm.

7. Vanne ou soupape à clapet sur siège plan, **caractérisée en ce qu'**elle comprend un dispositif d'étanchéité selon l'une quelconque des revendications précédentes.

8. Utilisation d'un dispositif selon l'une quelconque des revendications 1 à 6 pour une vanne ou soupape à clapet sur siège plan fonctionnant aux températures cryogéniques et/ou aux très hautes pressions.

## Claims

1. Sealing device (3) for a flap valve (1) on a plane seat (2) comprising a rear support (5) for a gasket with conical cutaway (13) and a sealing gasket (10), said gasket (10) having a plane rear surface (14) with a conical cutaway (16) corresponding to the surface (14') of the rear support (5), **characterised in that** the angle (α1) formed by the cutaway cone (16) with the plane part (14) of said gasket (10) is smaller than the angle (α2) formed by the conical cutaway (13) of said rear support (5) with the plane surface (14') of said rear support (5).

2. Device according to Claim 1, **characterised in that** the angle of the cone (α1) of said gasket (10) is at least three degrees smaller than the angle of the cone (α2) of said rear support (5).

3. Device according to Claim 1 or 2, **characterised in that** the angle of the cone (α1) of said gasket (10) is about 20 degrees for an angle of cone (α2) of said rear support (5) of about 25 degrees.

4. Device according to any one of the preceding claims, **characterised in that** said gasket (10) is a solid piece made of polymer, preferably PCTFE.

5. Device according to any one of the above claims, **characterised in that** the gasket (10) has a sealing surface (11) with an angle (α3) of a few degrees, and preferably smaller than 5 degrees relative to the surface of the plane seat (2).

6. Device according to Claim 5, **characterised in that**, with the flap (3) in the closed position, the peripheral sealing area (20) between the gasket (10) and the seat (2) has a width of a few millimetres, and preferably less than 1 mm.

7. Flap valve on a plane seat, **characterised in that** it comprises a sealing device according to any one of the preceding claims.

8. Use of a device according to any one of Claims 1 to 6 for a flap valve on a plane seat working at cryogenic temperatures and/or at very high pressures.

## Patentansprüche

1. Dichtungsvorrichtung (3) für ein Klappenventil (1) mit Tellersitz (2), das einen hinteren Dichtungshalter (5) mit konischer Aussparung (13) und eine Dichtung (10) umfasst, wobei diese Dichtung (10) eine hintere ebene Fläche (14) mit einer konischen Aussparung (16), die der Oberfläche 14' des hinteren Halters (5) entspricht, aufweist, **dadurch gekennzeichnet, dass** der Winkel (α1) zwischen dem Aussparungskegel (16) und dem ebenen Bereich (14) der besagten Dichtung (10) kleiner ist als der Winkel (α2) zwischen dem Aussparungskegel (13) des besagten hinteren Halters (5) und der ebenen Oberfläche (14') des besagten hinteren Halters (5).

2. Vorrichtung gemäß Anspruch 1, **dadurch gekennzeichnet, dass** der Winkel des Kegels (α1) der besagten Dichtung (10) wenigstens um 3 Grad kleiner ist als der Winkel (α2) des besagten hinteren Halters (5).

3. Vorrichtung gemäß Anspruch 1 oder 2, **dadurch gekennzeichnet, dass** der Winkel des Kegels (α1) der besagten Dichtung (10) ungefähr 20 Grad beträgt, während der Winkel (α2) des besagten hinteren Halters (5) etwa 25 Grad beträgt.

4. Vorrichtung gemäß einem der vorstehenden Ansprüche, **dadurch gekennzeichnet, dass** die besagte Dichtung (10) ein massives Polymerteil ist, vorzugsweise aus PCTFE.

5. Vorrichtung gemäß einem der vorstehenden Ansprüche, **dadurch gekennzeichnet, dass** die Dichtung (10) eine Dichtfläche (11) aufweist, die mit der Oberfläche des Tellersitzes (2) einen Winkel (α3) von wenigen Grad, vorzugsweise weniger als 5 Grad, bildet.

6. Vorrichtung gemäß Anspruch 5, **dadurch gekennzeichnet, dass** der Dichtbereich am Umfang (20) zwischen der Dichtung (10) und dem Sitz (2) in der Schließstellung der Klappe eine Breite von einigen Millimetern, vorzugsweise von weniger als 1 mm, aufweist.

7. Klappenventil mit Tellersitz, **dadurch gekennzeichnet, dass** es eine Dichtungsvorrichtung gemäß einem der vorstehenden Ansprüche umfasst.

8. Verwendung einer Vorrichtung gemäß einem der Ansprüche 1 bis 6 für ein Klappenventil mit Tellersitz, das bei Tiefsttemperaturen und/oder bei sehr hohen Drücken betrieben wird.
